Europäisches Patentamt

(19) European Patent Office    (11) Publication number: **0 010 794**

Office européen des brevets    **B1**

(12) **EUROPEAN PATENT SPECIFICATION**

(45) Date of publication of patent specification: **23.01.85**    (51) Int. Cl.⁴: **A 63 F 9/18, G 06 F 15/44**

(21) Application number: **79200569.6**

(22) Date of filing: **08.10.79**

(54) **Device for participating to a program emitted by a medium.**

(30) Priority: **10.10.78 BE 871120**

(43) Date of publication of application:
**14.05.80 Bulletin 80/10**

(45) Publication of the grant of the patent:
**23.01.85 Bulletin 85/04**

(84) Designated Contracting States:
**AT CH DE FR GB IT NL SE**

(56) References cited:
**DE-A-2 631 112**
**FR-A-2 397 210**

(73) Proprietor: **Hermans, Antonius M.**
**Luipegem 78**
**B-2680 Bornem (BE)**

(72) Inventor: **Hermans, Antonius M.**
**Luipegem 78**
**B-2680 Bornem (BE)**

(74) Representative: **Donné, Eddy**
**M.F.J.Bockstael Arenbergstraat 13**
**B-2000 Anvers (BE)**

Courier Press, Leamington Spa, England.

## Description

The present invention concerns a device for participating to a program emitted by a medium.

Medium as herein used means: television, radio, video-discs and tapes, cassettes etc.

A device for participating in a program emitted by a medium has already been proposed (US—A No 4.055.907). It is essentially a spelling teaching machine, whereby exact answers on questions are compared with answers provided by a participant operating a keyboard, a signal indicating the correctness of the participant's answers allowing information to appear on a display. As the participant's answers in fact pilot the device it is obvious that only one participant at a time can run the program.

The object of the present invention is substantially different as it consists in providing a device controlled by a medium, the number of such devices being simultaneously controlled by a said medium being theoretically unlimited.

This is achieved according to the invention by a device for participating in a program emitted by a medium, and being of the type where exact answers on questions are compared with answers provided by a participant operating a keyboard, whereby a signal indicating the correctness of the participant's answers allows information to appear on a display, characterised in that the device substantially comprises the combination of: a receiver-decoder for detecting exact answers on questions and the total of exact answers related to the emitted program, a first memory connected to said receiver-decoder for storing the correct answers; a keyboard for typing answers on the aforementioned questions and connected to a second memory via a first locking-unlocking circuit which is controlled by an output of said receiver-decoder; a first comparator intended to mutually compare the contents of said two memories and to count the successful comparisons; a third memory connected to said receiver-decoder for storing the total of exact answers; a fourth memory connected to said first comparator for storing the total of successful comparisons, a second comparator for comparing the contents of said third and fourth memory; a second locking-unlocking circuit connected between said receiver-decoder and a display and controlled by the output of said second comparator for allowing further information to appear on display.

In order to better understand the invention, the latter is hereinafter described with reference to the two appended block diagrams in which,

Fig. 1 shows an ealier development, and
Fig. 2 shows an embodiment of the present invention.

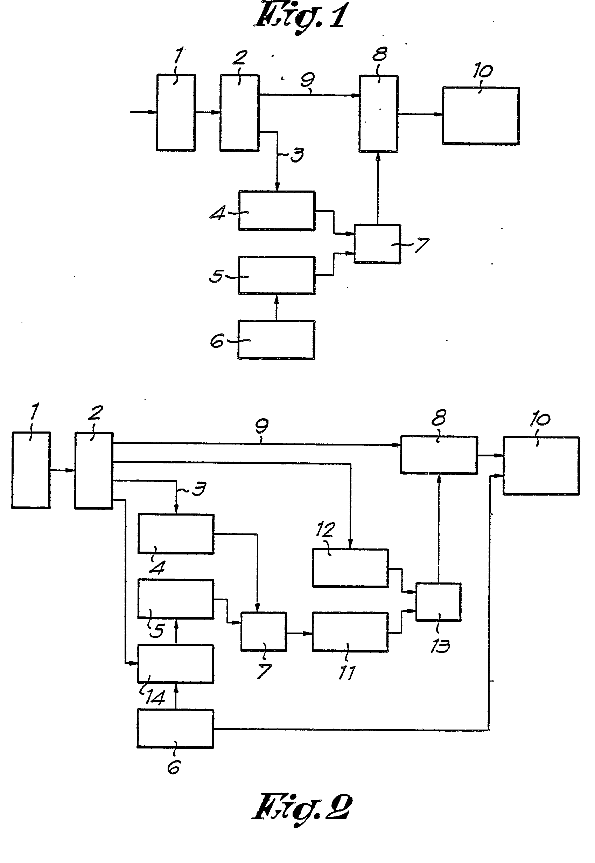

The device according to Figure 1 substantially comprises a receiver 1 with decoder 2, an output 3 of which being connected with a first memory 4. Data can be fed by the user into a second memory 5 by means of a keyboard 6.

A comparator 7 allows to mutually compare the contents of the memories 4 and 5. The output of comparator 7 controls a locking-unlocking circuit 8 for controlling the connection between a second output 9 of decoder 2 and a display 10.

The receiver 1 is intended to receive signals provided by a program, the latter being emitted by a medium.

Said program can for instance be a television program, whereby a number of viewers are each in possession of a device for participating in the program. During the emission of the program, a number of questions are put with the intention of selecting a winner amongst the viewers.

Each time that a question is put, the exact answer thereto is emitted in the shape of a series of pulses which can only be detected by the receivers 1. These pulses or information are temporarily kept in memory 4. Each viewer types his answer by means of keyboard 6, which loads memory 5. The contents of memories 4 and 5 are mutually compared, in each device, and the results of such successive comparisons are added to one another in said somparator 7. At a chosen moment, the exact total is emitted together with a message for instance a telephone number.

If the total in the comparator 7 coincides with the exact total, then the locking-unlocking circuit 8 allows said telephone number to appear on display 10. The first viewer who calls this number is the winner.

If no viewer has obtained the exact total, decreasing values can be emitted until a winner is found.

In the example according to Figure 2, the results of the comparisons made by comparator 7 are successively loaded in a third memory 11. The exact succession of correct answers is emitted and loaded in the fourth memory 12. Both contents of memories 11 and 12 are then compared in a comparator 13, the output signal of which controls the locking circuit 8.

The data fed into the device by the user can be visualized on the display 10 before being loaded in memory 5. In this case, the keyboard 6 shall be provided with an "ENTER" key. This allows to correct answers or modify answers before they are finally loaded.

The start and length of the allocated answering time can also be defined. A locking circuit 14, controlled by decoder 2, can therefore be provided between the keyboard 6 and the memory 5.

It is evident that the device according to the invention can be adapted to various media. It is indeed sufficient to adapt receiver 1 to the signalling possibilities of the considered media.

The keyboard 6 can be provided with alphanumeric keys, functions keys, signalization lamps or diodes, etc.

### Claim

Device for participating in a program emitted by a medium, and being of the type where exact answers on questions are compared with answers provided by a participant operating a keyboard, whereby a signal indicating the correctness of the participant's answers allows information to appear on a display, characterized in that the device substantially comprises the combination of: a receiver-decoder (1—2) for detecting exact answers on questions and the total of exact answers related to the emitted program, a first memory (4) connected to said receiver-decoder for storing the correct answers; a keyboard (6) for typing answers on the aforementioned questions and connected to a second memory (5) via a first locking-unlocking circuit (14) which is controlled by an output of said receiver-decoder; a first comparator (7) intended to mutually compare the contents of said two memories and to count the successful comparisons; a third memory (12) connected to said receiver-decoder for storing the total of exact answers; a fourth memory (11) connected to said first comparator (7) for storing the total of successful comparisons, a second comparator (13) for comparing the contents of said third and fourth memory; and second locking-unlocking circuit (8) connected between said receiver-decoder and a display (10) and controlled by the output of said second comparator (13) for allowing further information to appear on display (10).

### Revendication

Dispositif de participation à un programme émis par un médium, du genre dans lequel des réponses exactes sur des questions sont comparées sont comparées avec des réponses données par un participant chargé de la commande d'un clavier de commande, de manière qu'un signal indiquant l'exactitude de la réponse du participant met l'information en mesure d'apparaître sur un dispositif d'affichage, caractérisé en ce qu'il comporte essentiellement un récepteur-décodeur (1, 2) chargé de la détection de réponses exactes sur des questions concernant le programme émis; une première mémoire (4) connectée audit récepteur-décodeur en vue de la mise en mémoire des réponses exactes; un clavier (6) pour l'engegistrement des réponses données sur les susdites questions, connecté à une deuxième mémoire (5) par l'entremise d'un premier circuit de blocage et de déblocage (14), commandé par les signaux de sortie dudit récepteur-décodeur; un premier comparateur (7) chargé de la comparaison mutuelle des contenus des deux mémoires susmentionnées et du comptage des comparaisons effectuées avec succès; une troisème mémoire (12) connectée audit récepteur-décodeur pour la mise en mémoire du nombre total de réponses exactes; une quatrième mémoire (11) connectée au susdit premier comparateur (7) pour la mise en mémoire du nombre total de comparaisons effectuées avec succès; un deuxième comparateur (13) pour la comparaison mutuelle des contenus de la troisième et de la quatrième mémoire; un deuxième circuit de blocage et de déblocage (8) connecté entre ledit récepteur-décodeur et un dispositif d'affichage (10) et commandé par les signaux de sortie dudit deuxième comparateur (13) pour mettre toute information ultérieure en mesure d'être affichée sur ledit dispositif d'affichage (10).

### Patentanspruch

Vorrichtung zur Teilnahme an einem durch ein Medium ausgesandten Programm, der Art wobei genaue, auf Fragen gegebene Antworten mit durch einen ein Tastenbrett betätigenden Teilnehmer gegebenen Antworten verglichen werden und auf diese Weise Information durch ein die Richtigkeit der vom Teilnehmer herrührenden Antworten angebendendes Zeichen instandgesetzt wird auf einer Anseigevorrichtung zu erscheinen, dadurch gekennzeichnet, dass sie im wesentlichen aus den folgenden Teilen besteht, ein Empfänger-Entschlüsser (1, 2) für die Detektion der richtigen, auf Fragen in bezug auf das ausgesandte Programm gegebenen Antworten; ein ersten, an den vorgenannten Empfänger-Entschlüssler angeschlossener Speicher (4) für die Speicherung der richtigen Antworten; ein Tastenbrett (6) für das Registrieren der auf die betreffenden Fragen gegebenen Antworten, das über einen ersten, durch die Ausgangszeichen des vorgenannten Empfängers-Entschlüsslers gesteuerten Sperr- und Entsperrkreises (14) an einen zweiten Speicher (5) angeschlossen ist; ein erster Komparator (7) für die gegenseitige Vergleichung der Inhalte der beiden vorgenannten Speicher und für das Zählen der erfolgreichen Vergleichungen; ein an den vorgenannten Empfänger-Entschlüsser angeschlossener dritter Speicher (12) für die Speicherung der Gesamtzahl richtiger Antworten; ein vierter am vorgenannten ersten Komparator (7) angeschlossener Speicher (11) für die Speicherung der Gesamtzahl erfolgreicher Vergleichungen; ein zweiter Komparator (13) für die gegenseitige Vergleichung der Inhalte des dritten und des vierten Vorgenannten Speichers; ein zweiter, zwischen dem vorgenannten Empfänger-Entschlüssler und einer Anzeihevorrichtung (10) geschalteter Sperr- und Entsperrkreis (8), der durch die Ausgangszeichen des vorgenannten zweiten Komparators (13) gesteuert wird um das Erscheinen sämtlicher weiterer Informationen auf der vorgenannten Anziegevorrichtung (10) zu ermöglichen.

Fig.1

Fig.2